# EUROPÄISCHE PATENTSCHRIFT

(11) **EP 4 047 222 B1**
(45) Veröffentlichungstag und Bekanntmachung des Hinweises auf die Patenterteilung: **16.10.2024**
(21) Anmeldenummer: 22154870.4
(22) Anmeldetag: 03.02.2022
(51) Int. Cl.: F16B 5/06, F16B 5/12, F16B 7/04

(54) **VERBINDER ZUR BEFESTIGUNG EINES FLÄCHENELEMENTS AN EINER HINTERSCHNITTENEN T-NUT**
CONNECTOR FOR FIXING A SURFACE ELEMENT TO AN UNDERCUT T-GROOVE
CONNECTEUR DESTINÉ À LA FIXATION D'UN ÉLÉMENT SUPERFICIEL À UNE RAINURE EN T EN CONTRE-DÉPOUILLE

(30) Priorität: 17.02.2021 DE 102021201483
(43) Veröffentlichungstag der Anmeldung: 24.08.2022
(73) Patentinhaber: Robert Bosch GmbH, 70442 Stuttgart (DE)
(72) Erfinder: Schmid, Thomas, 71336 Waiblingen (DE); Taylor, Michael, 70806 Kornwestheim (DE)

(56) Entgegenhaltungen:
- EP-A2- 2 322 814
- DE-A1- 19 615 064
- DE-U1- 202006 003 605
- DE-U1- 202017 101 976
- US-B1- 10 218 305

## Beschreibung

Die Erfindung betrifft einen Verbinder zur Befestigung eines Randes eines Flächenelements bzw. einer Platte an einer hinterschnittenen T-Nut gemäß dem Oberbegriff des Patentanspruchs 1.

Aus dem Stand der Technik sind Verbinder bekannt, die in eine hinterschnittene T-Nut eines Profilstabs eingesetzt und dort befestigt werden. Diese Verbinder dienen dazu einen Rand eines Flächenelements an dem Profilstab zu befestigen. So sind z.B. rechteckige Rahmen aus Profilstäben bekannt, an denen ein entsprechend dimensioniertes rechteckiges Flächenelement vollumfänglich befestigt ist.

Das auf diese Weise gehaltene Flächenelement kann z.B. aus Plexiglas gefertigt sein, um als Schutz eines Bedieners vor einer Maschine oder vor umherfliegenden Partikeln zu dienen.

Im Internet unter https://www.minitec.de/produkte/profilsystem/befestigung-vonflaechenelementen/klemm-und-distanzprofile/flaechenklemmprofil-doppelt sind ein Profilstab und ein derartiger Verbinder gezeigt, der als längliches Profil gefertigt ist und somit in beliebiger Länge hergestellt werden kann. Damit kann seine Länge an die Läge des Randes angepasst werden, den er am Profilstab befestigen soll.

Weiterhin sind kleinteilige Verbinder bekannt, die einen T-Fuß haben, der in die hinterschnittene T-Nut eines Profilstabs eingedreht wird. Damit ist die Befestigung des Verbinders und damit auch des Flächenelements an der T-Nut formschlüssig. Je nach Größe bzw. Umfang des Flächenelements kommen mehr oder weniger von diesen Verbindern zum Einsatz.

In der Druckschrift DE 20 2017 101 976 U1 ist ein Verbinder offenbart, dessen T-Fuß derart ausgebildet ist, dass er nach dem Einsetzen in die hinterschnittene T-Nut wahlweise um 45° nach links oder nach recht gedreht werden kann. Mit einem derartigen Verbinder kann nicht nur ein Rand eines Flächenelements am Profilstab befestigt werden, der parallel zur T-Nut ausgerichtet ist, sondern der Rand kann auch senkrecht zur T-Nut ausgerichtet sein.

In der Druckschrift DE 20 2006 003 605 U1 ist ein Verbinder offenbart, dessen T-Fuß derart ausgebildet ist, dass er wahlweise um 90° nach links oder nach rechts gedreht werden kann. Mit diesem Verbinder kann nur ein parallel zur T-Nut ausgerichteter Rand eines Flächenelements befestigt werden. Allerdings kann durch die beiden möglichen Schwenkrichtungen die Seite der T-Nut gewählt werden, an der der Rand befestigt wird.

Gemäß der DE 20 2006 003 605 U1 ist das Flächenelement senkrecht zur Außenfläche der Profilstabes ausgerichtet, in der die T-Nut eingebracht ist. Die Auflage für den Rand des Flächenelements ist von der Außenfläche des Profilstabes gebildet, wenn dieser unter dem Flächenelement angeordnet ist. Allgemeiner ausgedrückt ist das Flächenelement senkrecht zur Umgebungsfläche der T-Nut ausgerichtet, in der die T-Nut eingebracht ist. Die Auflage für den Rand des Flächenelements ist von der Umgebungsfläche der T-Nut gebildet, wenn diese unter dem Flächenelement angeordnet ist.

Gemäß der EP 2 322 814 A2 kann der Verbinder durch Drehung von einer vorläufigen Stellung in eine endgültige Stellung überführt werden. In der endgültigen Stellung liegt das Flächenelement mit einer Randstirnfläche an einer endgültigen Anlagefläche des Haupkörpers des Verbinders an. In der vorläufigen Stellung kann die genannten Randstirnfläche zur Anlage mit dem Hauptkörper gebracht werden, wobei dies für die Montage des Verbinders nicht erforderlich und sogar hinderlich ist.

Dem gegenüber liegt der Erfindung die Aufgabe zu Grunde, einen Verbinder zu schaffen, mit dem das Flächenelement an einer hinterschnittenen T-Nut derart befestigt werden kann, dass das Flächenelement parallel zur Umgebungsfläche der T-Nut ausgerichtet ist und dabei trotzdem abstützbar ist, wenn diese unterhalb des Flächenelements angeordnet ist. Der Verbinder soll besonders einfach montierbar sein.

Diese Aufgabe wird gelöst durch einen Verbinder mit den Merkmalen des Patentanspruchs 1.

Weitere vorteilhafte Ausgestaltungen der Erfindung sind in den abhängigen Patentansprüchen beschrieben.

Der beanspruchte Verbinder kann auch als Plattenhalter bezeichnet werden und dient zur Befestigung eines Randes eines Flächenelements, das auch als Platte bezeichnet werden kann, an einer hinterschnittenen T-Nut, die auch als T-förmige Nut bezeichnet werden kann. Der beanspruchte Verbinder weist einen Hauptkörper und einen T-Fuß auf. Der T-Fuß ist in einer vorläufigen Stellung des Verbinders in die T-Nut einführbar. Der Verbinder ist weiterhin durch Drehung um eine Drehachse in einen endgültigen Stellung überführbar, in der der Verbinder formschlüssig in die T-Nut eingreift und unter Vorspannung an der T-Nut gehalten ist. Erfindungsgemäß ist in der endgültigen Stellung eine Randstirnfläche des Flächenelements in Anlage an einer endgültigen Anlagefläche des Hauptkörpers bringbar. Damit ist das an der T-Nut befestigte Flächenelement in einer senkrechten Einbaulage, also z.B. bei einer Verwendung als Schutzwand, an dem Verbinder abstützbar, wenn dieser unter dem Flächenelement angeordnet und in der endgültigen Stellung ist.

Die T-Nut kann z.B. an einem Gehäuse einer Maschine ausgebildet sein, von der z.B. Gefahr für einen Bediener ausgeht. Besonders bevorzugt erstreckt sich die T-Nut entlang eines Profilstabes. Dieser kann zu einem Baukastensystem gehören. Dann ist die Randstirnfläche des Flächenelements parallel zu einer Außenfläche des Profilstabs ausgerichtet.

Die Montage wird erleichtert, indem auch schon in der vorläufigen Stellung des Verbinders die Randstirnfläche des Flächenelements an einer vorläufigen Anlagefläche des Hauptkörpers in Anlage bingbar, also abstützbar ist. Damit ist das an der T-Nut befestigte Flächenelement in der senkrechten Einbaulage, also z.B. bei einer Verwendung als Schutzwand, an dem Verbinder abstützbar, wenn dieser unter dem Flächenelement angeordnet ist, auch wenn der T-Fuß lediglich in die T-Nut eingeschoben und dabei noch in der vorläufigen Stellung ist.

Die beiden Anlageflächen des Hauptkörpers sind tangential über einen zylindrischen Anlageabschnitt des Hauptkörpers miteinander verbunden, dessen Zylinderachse mit der Drehachse zusammenfällt. Dadurch kann der Verbinder mit gleichmäßigem geringem Widerstand von der vorläufigen Stellung in die endgültige Stellung gedreht werden, da die anliegende Randstirnfläche des Flächenelements von der Drehung und bei der Drehung und nach der Drehung auf konstanter Höhe abgestützt wird.

Vorzugsweise erstrecken sich die beiden Anlageflächen parallel zur Drehachse. und der zylindrische Abschnitt ist kreiszylindrisch. Dann ist der Verbinder besonders für die üblichen Flächenelemente geeignet, deren Randstirnflächen parallel zur Drehachse des Verbinders ist.

Üblicherweise hat der T-Fuß einen Hals, wobei hauptkörperseitig benachbart zum Hals an zwei einander gegenüberliegenden Seiten des Halses vorzugsweise zwei Anlagen angeordnet sind, die in der endgültigen Stellung beidseitig der T-Nut gegen deren Umgebungsfläche gespannt sind.

Für Elastizität und Fehlertoleranz hat der T-Fuß vorzugsweise eine Ausnehmung z.B. ein Sackloch, die bzw. das sich entlang der Drehachse erstreckt.

Für Elastizität und Fehlertoleranz hat der T-Fuß vorzugsweise eine Nut, die sich in der endgültigen Stellung entlang der T-Nut erstreckt. Diese Nut kann sich bis in den Hals erstrecken. Dann teilt sie den T-Fuß abschnittsweise in zwei Teile.

Gegen versehentliches oder vorsätzliches Ablösen des Verbinders von der T-Nut dient vorzugsweise eine Sicherung, die ein Zurückdrehen des Verbinders von der endgültigen in die vorläufige Stellung verhindert. Vorzugsweise ist diese Sicherung nur mit Werkzeug lösbar.

Bei einer bevorzugten Ausgestaltung weist die Sicherung eine Lasche des Hauptkörpers auf, die in der endgültigen Stellung zumindest abschnittsweise in die T-Nut vom Hauptkörper weg geschwenkt und/oder gebogen wird. Dazu kann ein Stift dienen, der sich durch ein Durchgangsloch des Hauptkörpers etwa parallel zur Drehachse erstreckt, und der in diesem Durchgangsloch z.B. mittels eines Gewindes befestigt ist. Der Stift kann also z.B. ein Gewindestift oder eine Madenschraube sein.

Um den Verbinder in der endgültigen und gesicherten Stellung im Wesentlichen zu fixieren und jegliche Drehung zu verhindern entspricht vorzugsweise eine Breite der Lasche etwa derjenigen der T-Nut.

Bei einem nicht näher gezeigten Ausführungsbeispiel beträgt die Drehung, durch die der Verbinder von der vorläufigen Stellung in die endgültige Stellung überführbar ist, 45°. Bei anderen Ausführungsbeispielen beträgt diese Drehung 90°.

Um die Ausführungsbeispiele des Verbinders mit der 90°-Drehung mit maximaler Flexibilität zu versehen, kann der T-Fuß vom Hauptkörper lösbar und um 90° um die Drehachse gedreht wieder am Hauptkörper befestigbar sein. Dann kann der Verbinder auch derart in die T-Nut eingedreht werden, dass die Randstirnfläche des Flächenelements quer zur T-Nut verläuft. Dann kann der Verbinder in der endgültigen Stellung eine Randstirnfläche eines Flächenelements abstützen, die längs oder quer zur T-Nut verläuft.

Bei den Ausführungsbeispielen mit der 90°-Drehung und bei der Weiterbildung mit der vorläufigen Anlagefläche sind diese beiden Anlageflächen 90° zueinander angestellt.

Der T-Fuß ist vorzugsweise rotationssymmetrisch um die Drehachse des Verbinders geformt, und zwar bei einem Rotationswinkel von 180°.

Als Anlage für die von der Nut abgewandten Großfläche des Flächenelements kann eine Anlagefläche des Hauptkörpers des Verbinders dienen, die sich von einem vom T-Fuß entfernten Bereich des Hauptkörpers in Richtung zur endgültigen Anlagefläche erstreckt. Diese Anlagefläche ist senkrecht zur endgültigen Anlagefläche.

Als Anlage für die von der Nut abgewandten Großfläche des Flächenelements kann alternativ mindestens eine elastischen Lasche vorgesehen sein, die sich von einem vom T-Fuß entfernten Bereich des Hauptkörpers in Richtung zur endgültigen Anlagefläche erstreckt, und die gegen die Großfläche des Flächenelements spannbar ist.

Vorzugsweise ist eine zweite elastische Lasche vorgesehen, die sich von dem vom T-Fuß entfernten Bereich des Hauptkörpers in Richtung zum zylindrischen Abschnitt erstreckt, und die ebenfalls gegen die Großfläche des Flächenelements spannbar ist.

Zwei Ausführungsbeispiele des erfindungsgemäßen Verbinders sind in den Figuren dargestellt.

Es zeigen
Figur 1 den erfindungsgemäßen Verbinder gemäß einem ersten Ausführungsbeispiel in einer perspektivischen Darstellung,
Figur 2 den Verbinder aus Figur 1 in einer vorläufigen Stellung zusammen mit einem Profilstab und einem Flächenelement in einer perspektivischen Darstellung,
Figur 3 den Verbinder aus Figur 1 in einer endgültigen Stellung zusammen mit einem Profilstab und einem Flächenelement in einer perspektivischen Darstellung,
Figur 4 einen Ausschnitt des Verbinders aus Figur 1 in der endgültigen Stellung zusammen mit einem Profilstab und einem Flächenelement in einer perspektivischen Darstellung und
Figur 5 den erfindungsgemäßen Verbinder gemäß einem zweiten Ausführungsbeispiel in einer perspektivischen Darstellung.

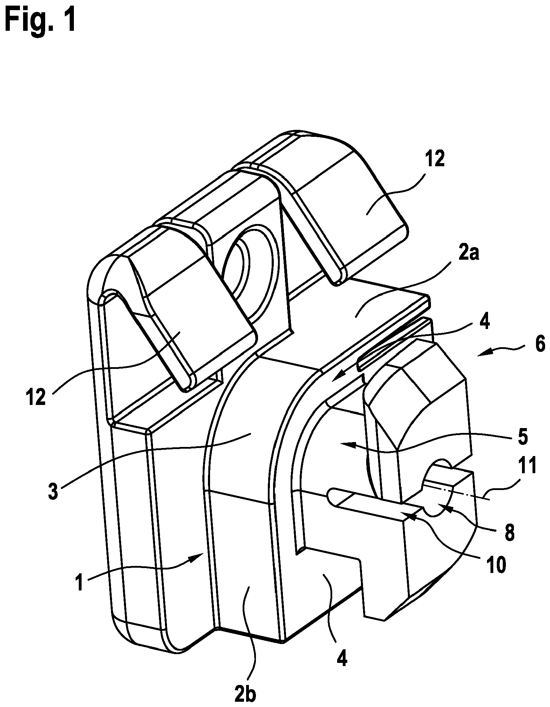

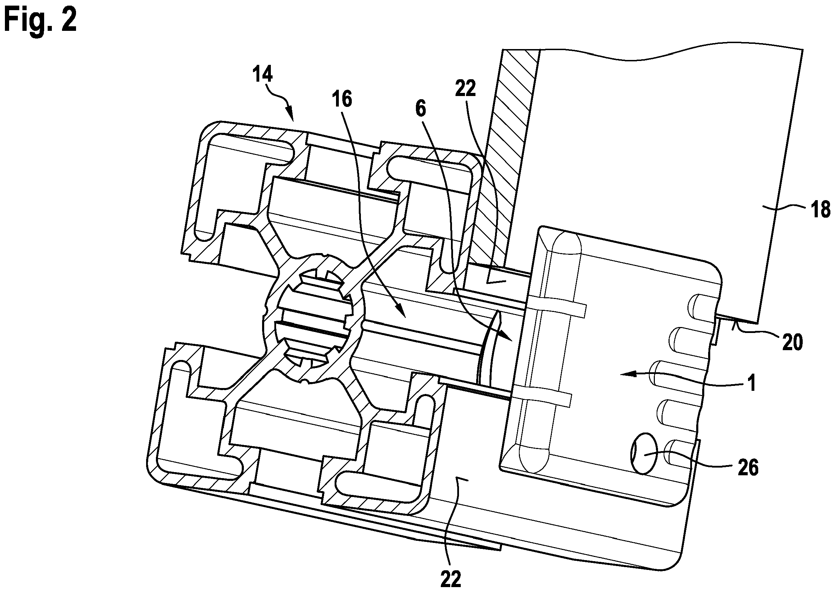

Figur 1 zeigt den erfindungsgemäßen Verbinder gemäß dem ersten Ausführungsbeispiel. Er hat einen Hauptkörper 1 und einen T-förmigen Fuß 6. am Hauptkörper 1 ist eine dreigeteilte Anlage für eine (in den Figuren 2 bis 4 gezeigte) schmale Stirnfläche eines Randes eines Flächenelements vorgesehen. Die dreigeteilte Anlage hat eine vorläufige Anlagefläche 2b, die tangential in einen kreiszylindrischen Anlageabschnitt 3 übergeht, der wiederum tangential in eine endgültige Anlagefläche 2a übergeht. Die endgültige Anlagefläche 2a dient in einer endgültigen Stellung (im fertig montierten Zustand) des Verbinders als Abstützung für die Randstirnfläche des Flächenelements, während die vorläufige Anlagefläche in einer vorläufigen Stellung (Übergangszustand) als Abstützung für die Randstirnfläche des Flächenelements dient.

Der T-Fuß 6 hat einen Hals 5 und einen zweigeteilten Nutstein, der in der endgültigen Stellung des Verbinders eine entsprechend geformte (in den Figuren 2 bis 4 gezeigte) T-Nut hintergreift und so den Verbinder formschlüssig an der T-Nut befestigt. Die Zweiteilung des Nutsteins ergibt sich dadurch, dass mittig in den T-Fuß 6 ein Sackloch 8 und eine Nut 10 eingebracht sind.

Der Verbinder ist bei seiner Montage um eine Drehachse 11 drehbar, die eine Mittelachse des T-Fußes 6 bildet, und die mit einer Mittelachse des kreiszylindrischen Abschnitts 3 zusammenfällt. Der T-Fuß 6 bildet sich bei einer Drehung um 180° um die Drehachse 11 auf sich selbst ab.

Der Hauptkörper 1 hat einstückig zwei gleichförmige Laschen 12, die sich beide von einem von der Drehachse 11 entfernten Bereich des Hauptkörpers 1 in Richtung zur Drehachse 11 erstrecken. Die Laschen 12 sind in Figur 1 in einem entspannten Zustand gezeigt und werden im montierten Zustand gegen das Flächenelement gespannt. Genauer gesagt liegen die beiden Laschen 12 im montierten Zustand des Flächenelements an dessen Großseite an und spannen das Flächenelement gegen eine (in den Figen 2 bis 4 gezeigte) Umgebungsfläche der T-Nut.

Weiterhin hat der Hauptkörper 1 zwischen der dreigeteilten Anlage 2a, 2b, 3 und dem Hals 5 des T-Fußes 6 zwei Anlagen 4, die in der endgültigen Stellung des Verbinders beidseitig der T-Nut gegen deren Umgebungsflächen gespannt werden. Dabei sind die beiden hauptkörperseitigen Anlagen 4 in Wirkverbindung mit jeweils einem der beiden Teile des Nutsteins des T-Fußes 6.

Figur 2 zeigt den Verbinder aus Figur 1 in der vorläufigen Stellung zusammen mit einem Ausschnitt eines Profilstabes 14 und mit einem Ausschnitt eines Flächenelements 18. Bei dem gezeigten Zusammenbau ist der Verbinder unterhalb des Flächenelements 18 angeordnet, wobei der T-Fuß 6 bereits in die T-Nut 16 des Profilstabes 14 eingeschoben ist. Damit ergibt sich die so genannte vorläufige Stellung, die auch als Übergangsstellung bezeichnet werden kann. In dieser Stellung kann bereits eine Randstirnfläche 20 des Flächenelements 18 an der vorläufigen Anlagefläche 2b (vgl. Figur 1) abgestützt werden, was besonders in der in Figur 2 gezeigten Montagesituation vorteilhaft ist, in der der Verbinder unterhalb des Flächenelements 18 angeordnet ist.

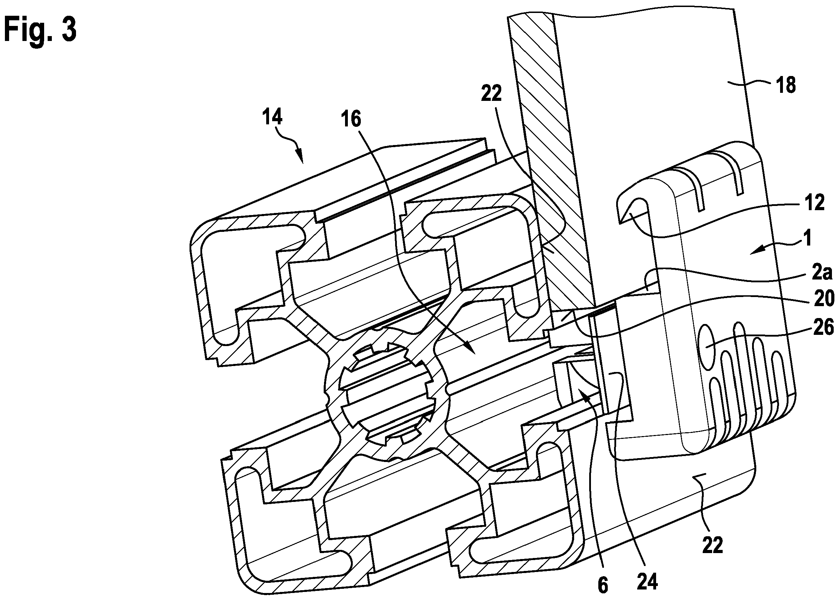

In einem folgenden Arbeitsschritt wird der Verbinder im Uhrzeigersinn um 90° in die in Figur 3 gezeigte endgültige Stellung gedreht.

Figur 3 zeigt den Verbinder zusammen mit dem Ausschnitt des Profilstabes 14 und mit dem Ausschnitt des Flächenelements 18 aus der vorhergehenden Figur 2 in der endgültigen Stellung des Verbinders.

Aus CAD-technischen Gründen ist eine der zum Flächenelement 18 hin (in Figur 2 nach rechts) gebogene bzw. gedrängten Laschen 12 nur zu einem sehr geringen Teil dargestellt. Die andere Lasche 12 ist durch den Hauptkörper 1 verdeckt.

In der endgültigen Stellung ist das Flächenelement 18 zwischen einer Umgebungsfläche 22 der T-förmigen Nut 16 und den beiden Laschen 12 eingespannt. In der endgültigen Stellung ist weiterhin die untere Randstirnfläche 20 des Flächenelements 18 an der endgültigen Anlagefläche 2a des Hauptkörpers 1 abgestützt. Der Verbinder seinerseits ist an dem Profilstab 14 formschlüssig befestigt, in dem beidseitige Randbereiche der T-Nut 16 jeweils zwischen einer hauptkörperseitigen Anlage 4 und einem Teil des Nutsteins des T Fußes 6 eingespannt sind.

Um den Verbinder in der gezeigten endgültigen Stellung zu fixieren und dabei ein versehentliches oder absichtliches Lösen zu verhindern, ist am Hauptkörper 1 eine Lasche 24 vorgesehen, die mittels eines (nicht gezeigten) Gewindestiftes in die T-Nut 16 hereingedrückt wird. Dazu wird der Gewindestift in ein Durchgangsloch 26 des Hauptkörpers 1 eingedreht.

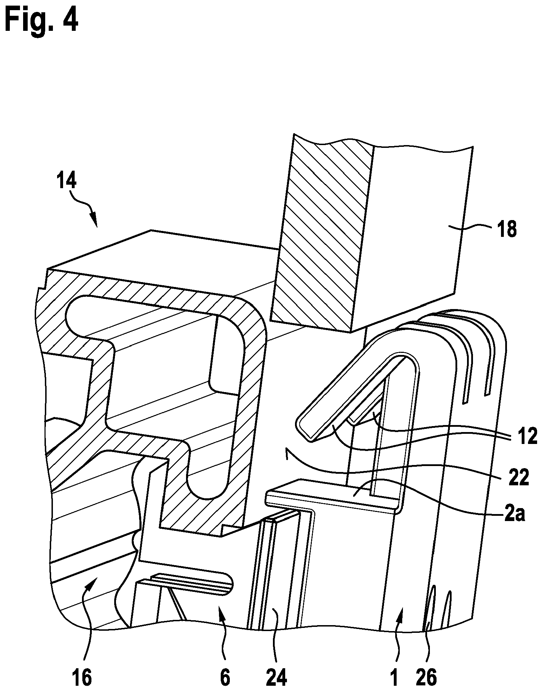

Figur 4 zeigt den Verbinder zusammen mit dem Ausschnitt des Profilstabes 14 und mit dem Ausschnitt des Flächenelements 18 aus der vorhergehenden Figur 2. Der Verbinder ist (wie auch in der Figur 3) in der endgültigen Stellung gezeigt, allerdings ist das Flächenelement 18 noch nicht zwischen der Umgebungsfläche 22 der T-Nut 16 und die beiden Laschen 12 des Hauptkörpers 1 aufgenommen.

Beim ersten Ausführungsbespiel des erfindungsgemäßen Verbinders gemäß den Figuren 1 bis 4 kann das also auch Flächenelement 18 nachträglich zwischen die Umgebungsfläche 22 der T-Nut 16 und die beiden Laschen 12 des Hauptkörpers 1 eingeschoben werden. Dabei werden die beiden Laschen 12 in die (in Figur 3 nur teilweise gezeigte) gespannte Stellung gedrängt.

Beim gezeigten Ausführungsbeispiel sind auf Grund der Elastizität der beiden Laschen 12 Flächenelemente mit einer Dicke von 2 bis 6 mm am Profilstab 14 befestigbar.

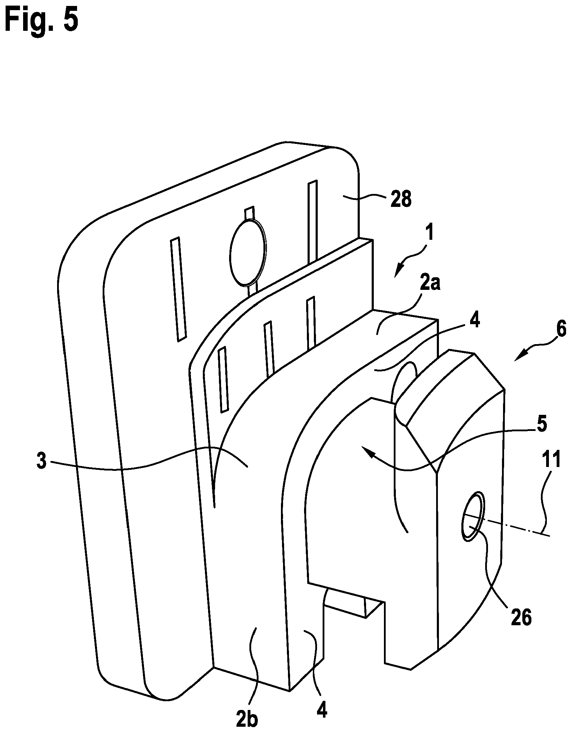

Figur 5 zeigt ein zweites Ausführungsbeispiel des erfindungsgemäßen Verbinders, wobei im Folgenden nur die Unterschiede zum ersten Ausführungsbeispiel erläutert werden. Bei dem T-Fuß 6 ist keine Nut vorgesehen. Damit ist der T-Fuß 6 nicht in zwei Teile geteilt. Am Hauptkörper 1 sind die Laschen entfallen, sodass das Flächenelement 18 zwischen einer vergleichsweise unelastischen Anlagefläche 28 des Hauptkörpers 1 und der Umgebungsfläche 22 der T-Nut 16 präzise eingespannt wird.

Der offenbarte Verbinder dient zur Befestigung eines Randes eines Flächenelements an einer T-förmigen Nut, die vorzugsweise an einem T-Nuten-Profil gebildet ist. Der Verbinder weist einen Hauptkörper und einen T-förmigen Fuß auf. Der Fuß ist in einer vorläufigen Stellung des Verbinders in die Nut einführbar. Danach ist der Verbinder durch eine Drehung (vorzugsweise um 90°) um eine Drehachse in einen endgültigen Stellung überführbar, in der der Verbinder formschlüssig in die Nut eingreift und unter Vorspannung an der Nut gehalten ist. In der endgültigen Stellung ist eine Stirnfläche am Rand des Flächenelements in Anlage an einer so genannten endgültigen Anlagefläche des Hauptkörpers abstützbar, wenn der Verbinder unter dem Flächenelement montiert ist.

Die Befestigungsvorrichtung des Verbinders an dem Profilstab kann auch als Bajonettverschluss bezeichnet werden.

### Bezugszeichenliste

- 1: Hauptkörper
- 2a: endgültige Anlagefläche
- 2b: vorläufige Anlagefläche
- 3: zylindrischer Anlageabschnitt / kreiszylindrischer Anlageabschnitt
- 4: hauptkörperseitige Anlage
- 5: Hals
- 6: T-Fuß
- 8: Ausnehmung / Sackloch
- 10: Nut
- 11: Drehachse
- 12: Lasche
- 14: Profilstab
- 16: T-Nut
- 18: Flächenelement
- 20: Randstirnfläche
- 22: Umgebungsfläche
- 24: Lasche
- 26: Durchgangsloch
- 28: Anlagefläche

## Patentansprüche

1. Verbinder zur Befestigung eines Flächenelements (18) an einer hinterschnittenen T-Nut (16), wobei der Verbinder einen Hauptkörper (1) und einen T-Fuß (6) aufweist, der in einer vorläufigen Stellung des Verbinders in die T-Nut (16) einführbar ist, wobei der Verbinder durch Drehung um eine Drehachse (11) in eine endgültigen Stellung überführbar ist, in der der Verbinder formschlüssig in die T-Nut (16) eingreift und unter Vorspannung an der T-Nut (16) gehalten ist, wobei in der endgültigen Stellung eine Randstirnfläche (20) des Flächenelements (18) in Anlage an einer endgültigen Anlagefläche (2a) des Hauptkörpers (1) bringbar ist, wobei in der vorläufigen Stellung die Randstirnfläche des Flächenelements (18) an einer vorläufigen Anlagefläche (2b) des Hauptkörpers (1) in Anlage bringbar ist,
**dadurch gekennzeichnet, dass** die beiden Anlageflächen (2a, 2b) tangential über einen zylindrischen Anlageabschnitt (3) miteinander verbunden sind, dessen Zylinderachse mit der Drehachse (11) zusammenfällt.

2. Verbinder nach Anspruch 1, wobei der T-Fuß (6) einen Hals (5) hat, wobei an einander gegenüberliegenden Seiten des Halses (5) jeweils eine hauptkörperseitige Anlage (4) angeordnet ist, die in der endgültigen Stellung beidseitig gegen eine Umgebungsfläche (22) der T-Nut (16) gespannt sind.

3. Verbinder nach einem der vorhergehenden Ansprüche, wobei der T-Fuß (6) eine Ausnehmung (8) hat, die sich entlang der Drehachse (11) erstreckt.

4. Verbinder nach einem der vorhergehenden Ansprüche, wobei der T-Fuß (6) eine Nut (10) hat, die in der endgültigen Stellung parallel zur T-Nut (16) angeordnet ist.

5. Verbinder nach einem der vorhergehenden Ansprüche mit einer Sicherung zum Fixieren des Verbinders in der endgültigen Stellung.

6. Verbinder nach Anspruch 5, wobei die Sicherung eine Lasche (24) des Hauptkörpers (1) aufweist, die in der endgültigen Stellung zumindest abschnittsweise in die T-Nut (16) geschwenkt und/oder gebogen ist.

7. Verbinder nach einem der vorhergehenden Ansprüche, wobei die Drehung, durch die der Verbinder von der vorläufigen Stellung in die endgültige Stellung überführbar ist, 45° beträgt.

8. Verbinder nach einem der Ansprüche 1 bis 6, wobei die Drehung, durch die der Verbinder von der vorläufigen Stellung in die endgültige Stellung überführbar ist, 90° beträgt.

9. Verbinder nach Anspruch 8, wobei der T-Fuß (6) vom Hauptkörper (1) lösbar und um 90° um die Drehachse (11) gedreht wieder am Hauptkörper (1) befestigbar ist.

10. Verbinder nach Anspruch 8 oder 9, wobei die beiden Anlageflächen (2a, 2b) 90° zueinander angestellt sind.

11. Verbinder nach einem der vorhergehenden Ansprüche mit einer Anlagefläche (28) des Hauptkörpers (1), die sich von einem vom T-Fuß (6) entfernten Bereich des Hauptkörpers (1) in Richtung zur endgültigen Anlagefläche (2a) erstreckt, und die senkrecht zur endgültigen Anlagefläche (2a) ist.

12. Verbinder nach einem der Ansprüche 1 bis 10 mit mindestens einer elastischen Lasche (12), die sich von einem vom T-Fuß (6) entfernten Bereich des Hauptkörpers (1) in Richtung zur endgültigen Anlagefläche (2a) erstreckt, und die gegen das Flächenelement (18) spannbar ist.

## Claims

1. Connector for fastening a sheet-like element (18) on an undercut T-groove (16), wherein the connector has a main body (1) and a T-foot (6) which, in a provisional position of the connector, can be inserted into the T-groove (16), wherein the connector can be transferred, by rotation about an axis of rotation (11), into a final position in which the connector engages in the T-groove (16) in a form-fitting manner and is held on the T-groove (16) with preloading, wherein, in the final position, an edge end face (20) of the sheet-like element (18) can be brought into abutment with a final abutment surface (2a) of the main body (1), wherein, in the provisional position, the edge end face of the sheet-like element (18) can be brought into abutment with a provisional abutment surface (2b) of the main body (1),
**characterized in that** the two abutment surfaces (2a, 2b) are tangentially connected to one another via a cylindrical abutment portion (3) whose cylinder axis coincides with the axis of rotation (11).

2. Connector according to Claim 1, wherein the T-foot (6) has a neck (5), wherein main body-side abutments (4) are arranged one each on mutually opposite sides of the neck (5) and, in the final position, are clamped on both sides against a surrounding surface (22) of the T-groove (16).

3. Connector according to either of the preceding claims, wherein the T-foot (6) has a recess (8) which extends along the axis of rotation (11).

4. Connector according to one of the preceding claims, wherein the T-foot (6) has a groove (10) which, in the final position, is arranged parallel to the T-groove (16).

5. Connector according to one of the preceding claims having a securing means for fixing the connector in the final position.

6. Connector according to Claim 5, wherein the securing means comprises a lug (24) of the main body (1) which, in the final position, has at least some portion thereof pivoted and/or bent into the T-groove (16).

7. Connector according to one of the preceding claims, wherein the rotation by which the connector can be transferred from the provisional position into the final position is 45°.

8. Connector according to one of Claims 1 to 6, wherein the rotation by which the connector can be transferred from the provisional position into the final position is 90°.

9. Connector according to Claim 8, wherein the T-foot (6) can be detached from the main body (1) and can be re-fastened on the main body (1) by being rotated by 90° about the axis of rotation (11).

10. Connector according to Claim 8 or 9, wherein the two abutment surfaces (2a, 2b) are set at 90° to one another.

11. Connector according to one of the preceding claims having an abutment surface (28) of the main body (1) which extends from a region of the main body (1) remote from the T-foot (6) in the direction of the final abutment surface (2a), and which is perpendicular to the final abutment surface (2a).

12. Connector according to one of Claims 1 to 10 having at least one elastic lug (12) which extends from a region of the main body (1) remote from the T-foot (6) in the direction of the final abutment surface (2a), and which can be clamped against the sheet-like element (18).

## Revendications

1. Connecteur pour fixer un élément de surface (18) à une rainure en T (16) en contre-dépouille, le connecteur présentant un corps principal (1) et un pied en T (6) qui peut être inséré dans la rainure en T (16) dans une position provisoire du connecteur, le connecteur pouvant être transféré dans une position finale par rotation autour d'un axe de rotation (11), dans laquelle le connecteur s'engage par complémentarité de forme dans la rainure en T (16) et est maintenu sous précontrainte sur la rainure en T (16) ; dans la position finale, une surface frontale de bord (20) de l'élément de surface (18) pouvant être amenée en appui contre une surface d'appui finale (2a) du corps principal (1) : dans la position provisoire, la surface frontale de bord de l'élément de surface (18) pouvant être amenée en appui contre une surface d'appui provisoire (2b) du corps principal (1),
**caractérisé en ce que** les deux surfaces d'appui (2a, 2b) sont reliées tangentiellement l'une à l'autre par l'intermédiaire d'une section d'appui cylindrique (3) dont l'axe de cylindre coïncide avec l'axe de rotation (11).

2. Connecteur selon la revendication 1, dans lequel le pied en T (6) a un col (5), un appui (4) côté corps principal étant agencé respectivement sur des côtés opposés l'un à l'autre du col (5), qui, dans la position finale, est serré des deux côtés contre une surface environnante (22) de la rainure en T (16).

3. Connecteur selon l'une quelconque des revendications précédentes, dans lequel le pied en T (6) a un évidement (8) qui s'étend le long de l'axe de rotation (11).

4. Connecteur selon l'une quelconque des revendications précédentes, dans lequel le pied en T (6) a une rainure (10) qui, dans la position finale, est agencée parallèlement à la rainure en T (16).

5. Connecteur selon l'une quelconque des revendications précédentes, avec une sécurité pour fixer le connecteur dans la position finale.

6. Connecteur selon la revendication 5, dans lequel la sécurité présente une patte (24) du corps principal (1) qui, dans la position finale, est pivotée et/ou pliée au moins par sections dans la rainure en T (16).

7. Connecteur selon l'une quelconque des revendications précédentes, dans lequel la rotation par laquelle le connecteur peut être transféré de la position provisoire à la position finale est de 45°.

8. Connecteur selon l'une quelconque des revendications 1 à 6, dans lequel la rotation par laquelle le connecteur peut être transféré de la position provisoire à la position finale est de 90°.

9. Connecteur selon la revendication 8, dans lequel le pied en T (6) peut être détaché du corps principal (1) et tourné de 90° autour de l'axe de rotation (11) pour être fixé à nouveau au corps principal (1).

10. Connecteur selon la revendication 8 ou 9, dans lequel les deux surfaces d'appui (2a, 2b) sont inclinées à 90° l'une par rapport à l'autre.

11. Connecteur selon l'une quelconque des revendications précédentes, avec une surface d'appui (28) du corps principal (1) qui s'étend depuis une zone du corps principal (1) éloignée du pied en T (6) en direction de la surface d'appui finale (2a), et qui est perpendiculaire à la surface d'appui finale (2a).

12. Connecteur selon l'une quelconque des revendications 1 à 10, avec au moins une patte élastique (12) qui s'étend depuis une zone du corps principal (1) éloignée du pied en T (6) en direction de la surface d'appui finale (2a), et qui peut être serrée contre l'élément de surface (18).
